# EUROPÄISCHE PATENTSCHRIFT

(11) **EP 3 029 296 B1**
(45) Veröffentlichungstag und Bekanntmachung des Hinweises auf die Patenterteilung: **21.03.2018**
(21) Anmeldenummer: 15003149.0
(22) Anmeldetag: 03.11.2015
(51) Int. Cl.: F02B 67/10, F02B 37/00

(54) **VORRICHTUNG ZUR ABGASFÜHRUNG**
EXHAUST GAS GUIDANCE DEVICE
DISPOSITIF D'EVACUATION DES GAZ D'ECHAPPEMENT

(30) Priorität: 04.12.2014 DE 102014017974
(43) Veröffentlichungstag der Anmeldung: 08.06.2016
(73) Patentinhaber: DEUTZ Aktiengesellschaft, 51149 Köln (DE)
(72) Erfinder: Schumacher, Ulrike, 51427 Bergisch-Gladbach (DE); Feuser, Wilhelm, 53332 Bornheim (DE); Darscheidt, Jürgen, 51107 Köln (DE)

(56) Entgegenhaltungen:
- WO-A1-2013/020479
- DE-A1- 19 840 554
- JP-A- 2013 189 921
- US-A1- 2010 040 465
- US-A1- 2013 047 605

## Beschreibung

Die Erfindung betrifft eine Vorrichtung zur Abgasführung.

Derartige Vorrichtungen sind bekannt aus der WO 2011/151379 A1. Offenbart wird eine Brennkraftmaschine mit einem Einlasssystem, einem Auslasssystem und einem Abgasrückführsystem, sowie mit zumindest einem Abgasturbolader (ATL), mit einer Abgasturbine und einem Verdichter, wobei einer ersten Gruppe von Zylindern ein erster Einlassstrang und ein erster Auslassstrang und einer zweiten Gruppe von Zylindern ein zweiter Einlassstrang und ein zweiter Auslassstrang zugeordnet ist, wobei eine erste Abgasrückführleitung von einem ersten Abgasstrang stromaufwärts der Abgasturbine abzweigt und in einen ersten Einlassstrang stromabwärts des Verdichters einmündet, und wobei eine zweite Abgasrückführleitung von einem zweiten Abgasstrang stromaufwärts der Abgasturbine abzweigt und in einen zweiten Einlassstrang stromabwärts des Verdichters einmündet, wobei der erste Einlassstrang ein erstes Resonanzrohr und der zweite Einlassstrang ein zweites Resonanzrohr aufweist. Die Mündungsbereiche der ersten und zweiten Abgasrückführleitungen sind am Beginn der ersten bzw. der zweiten Resonanzrohre angeordnet. Daran ist nachteilig, dass die Verrohrung aufwendig und teuer ist, die Leitungswege unterschiedlich lang sind.

Weiter ist eine V-förmige Brennkraftmaschine aus der DE 101 22 406 B4 bekannt, bei der der Ausgang des Kanals für den Schmiermittelrücklauf der Konsole und der Eingang des Kanals für den Schmiermittelrücklauf der Konsole achsversetzt zueinander angeordnet sind.

Ein Trägergehäuse für eine Brennkraftmaschine mit einem Motorblock mit einer V-Anordnung von Zylindern und mit einer Aufladegruppe wird in der WO 2012/038037 A1 offenbart. Ein weiterer Nachteil bei Traktoren ist, dass sie einen sehr schmalen Bauraum haben, der unter anderem durch den erforderlichen engen Radeinschlag verursacht wird, seitlicher Bauraum am Motor ist deshalb schwer zugänglich. Die US 2010/0040465 A1 zeigt eine Brennkraftmaschine mit Konsole, die nur einen Abgasrückführflansch aufweist.

Es ist die Aufgabe der vorliegenden Erfindung, die oben genannten Nachteile zu vermeiden und eine Brennkraftmaschine und ein Verfahren zum Betreiben derselben zu schaffen, die die künftigen Abgasregelungen bei vertretbaren Kosten einhält.
Gelöst wird die Aufgabe durch eine Brennkraftmaschine mit einem Kurbelgehäuse, in dem eine Kurbelwelle drehbar gelagert ist, an der zumindest ein einen Kolben tragendes Pleuel angelenkt ist, wobei der Kolben in einem von einem Zylinderkopf abgedeckten Zylinder bewegbar ist, wobei in den Zylinderkopf Gaswechselventile eingebaut sind, die über Gaswechselkanäle mit einer wenigstens zweiteiligen Abgasleitung und einer Ladeluftleitung verbunden sind und wobei ein Abgasturbolader vorgesehen ist, der mittels einer Konsole an der Brennkraftmaschine befestigt ist und mit der Abgasleitung und der Ladeluftleitung verbunden ist, wobei die Konsole zwischen dem Abgasturbolader und der Brennkraftmaschine angeordnet ist und die Konsole das Abgas führt, wobei die Abgasleitung zweigeteilt ist und wobei die Konsole zwei Abgasrückführflansche aufweist. Eine vorteilhafte Weiterbildung sieht vor, dass die Konsole am Zylinderkopf befestigt ist, was vorteilhaft ist, wenn es schmale Bauräume gibt.
Weitere vorteilhafte Ausgestaltungen sind in den Unteransprüchen enthalten.
Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche Bauteile beziehen. Es zeigen:
- Figur 1: eine Seitenansicht der Brennkraftmaschine mit ATL-Konsole,
- Figur 2a: eine Seitenansicht der Brennkraftmaschine mit ATL-Konsole und AGR-Kühler,
- Figur 2b: eine Vorderansicht der Brennkraftmaschine mit ATL-Konsole und AGR-Kühler,
- Figur 3a: eine Vorkomplettierung des vorderen Rohres aus Figur 1,
- Figur 3b: die Steckstückrohre des vorderen bzw. hinteren Rohres aus Figur 1,
- Figur 3c: eine Vorkomplettierung des hinteren Rohres aus Figur 1,
- Figur 4a: ein Steckstückrohr zwischen Konsole und Teilabgasleitungsrohr mit Lamellenringen,
- Figur 4b: ein Steckstückrohr zwischen Konsole und Teilabgasleitung,
- Figur 4c: ein Steckstückrohr zwischen Konsole und Teilabgasleitungsrohr mit Drehgestrick, Stahlringen und Wellfedern,
- Figuren 5a - 5g: verschieden Darstellungen der ATL-Konsole,
- Figur 6: eine Draufsicht auf die Brennkraftmaschine.

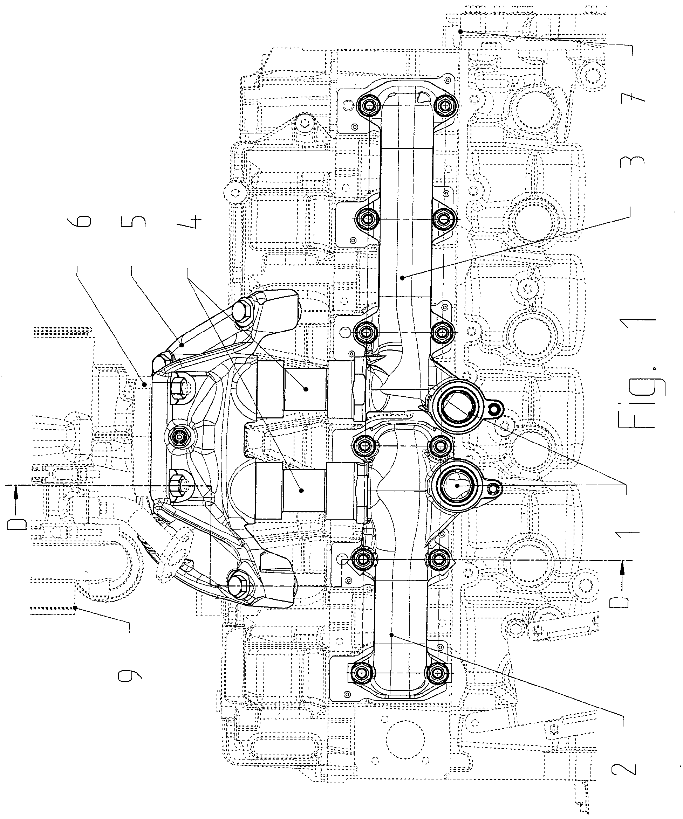

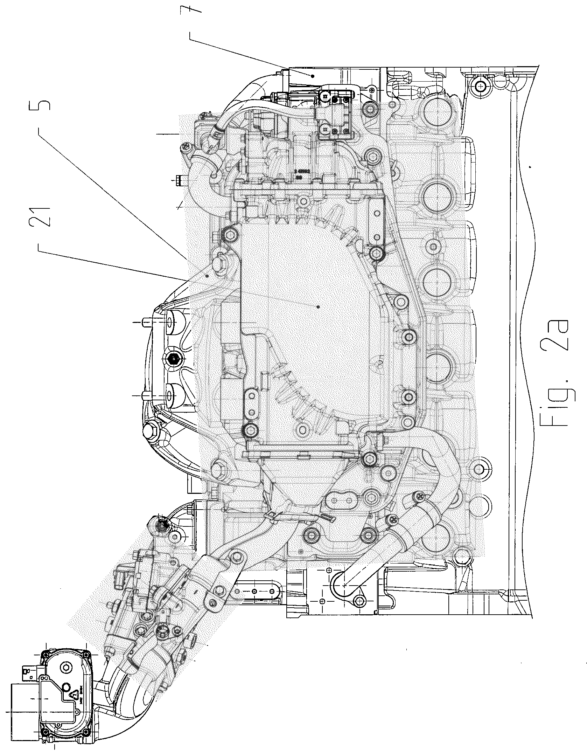

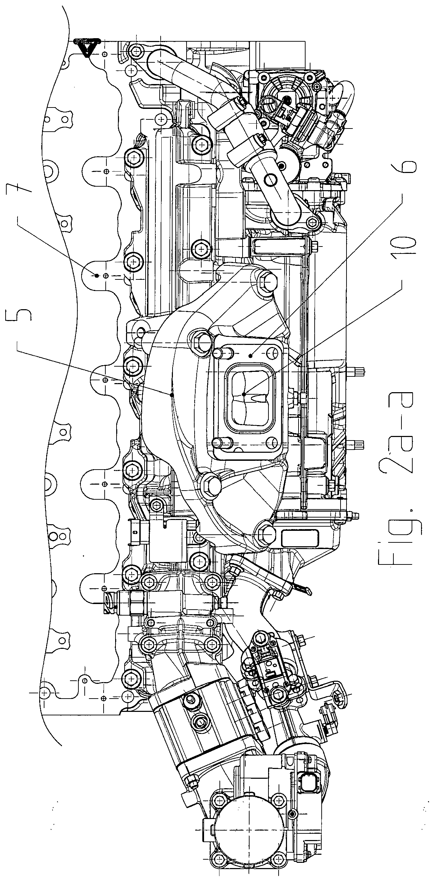

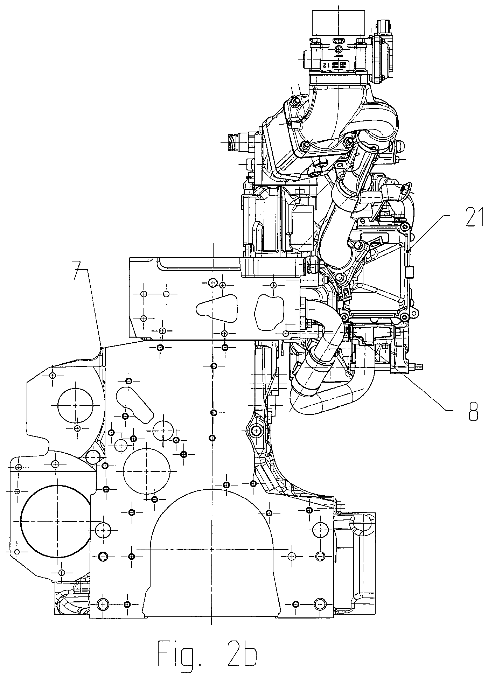

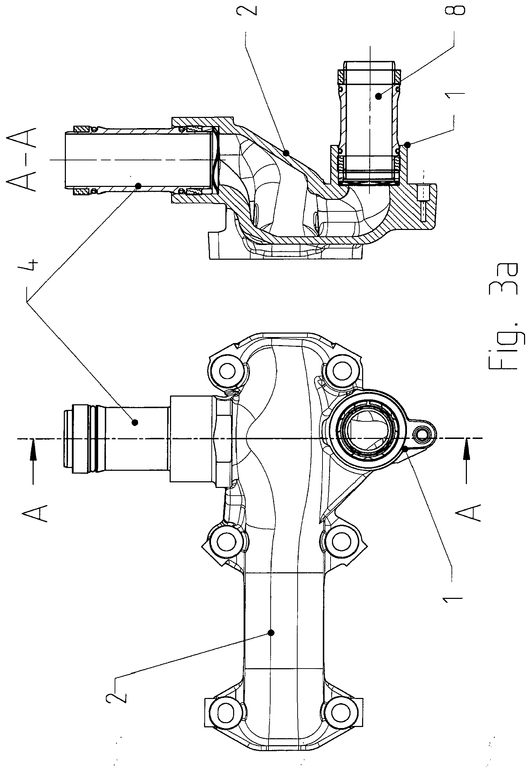

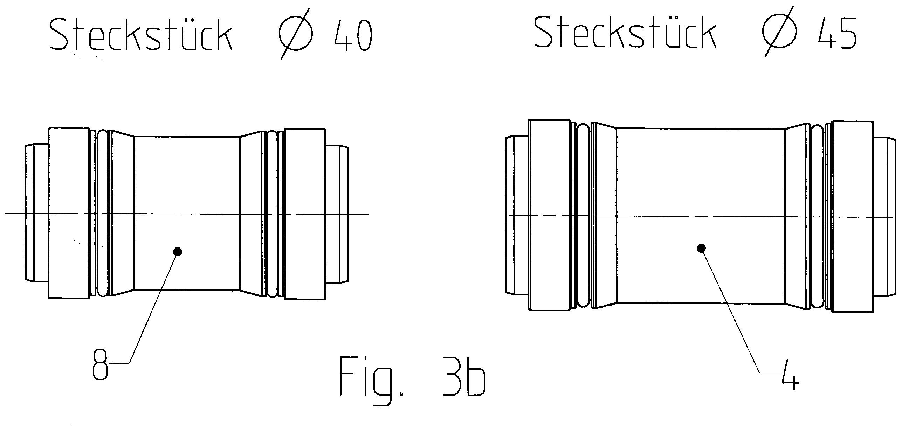

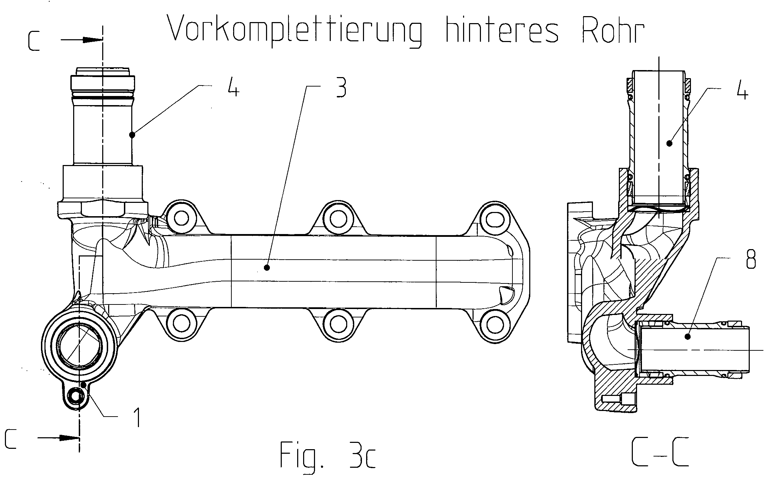

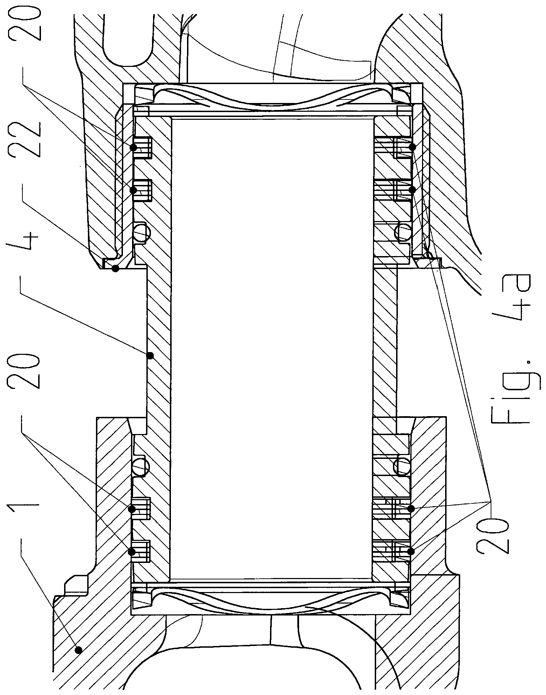

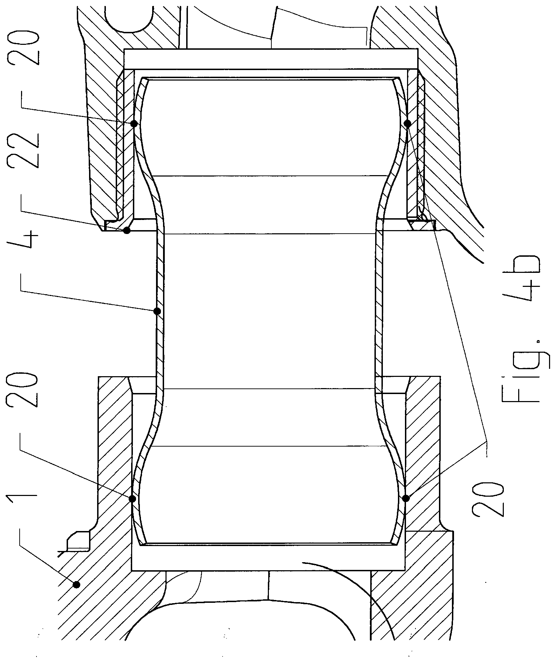

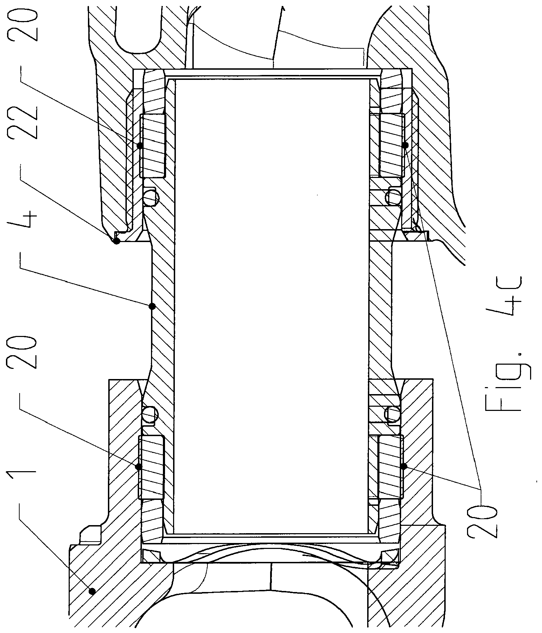

Figur 1 und 2 zeigen eine Abgasturbolader (ATL)-Konsole 5, die mittels eines Befestigungsflansches 26 an der Brennkraftmaschine 7 befestigt ist. Die ATL-Konsole 5 weist zwei Abgasführflansche 1 auf, die den Abgasführstrom von der Abgasleitung zum Abgasturbolader 9 ermöglichen. In Figur 1 sind die Schnittstellen der Abgasrückführung an den schmalen Abgasleitungen 2, 3 für den Betrieb mit AGR-Kühler zu sehen. Bei einem Anwendungsfall ohne AGR-Kühler könnten diese Schnittstellen mit Blindstopfen verschlossen werden. Der Abgasturbolader ist mittels der ATL-Konsole 5 auf der Ladeluftleitung angeordnet. Die Abgasleitungen 2, 3 sind von der Konsole in Bezug auf Bauteildehnungen und Fertigungs- und Montagetoleranzen entkoppelt. Als Entkopplungssysteme können Lamellen-Ringe von "Fey", Steckstückverbindungen mit Drahtgestrickelementen oder auch ein Kupplungsstück wie bei der Verbindung des "Parker Airducts" vorgesehen werden. Detaillierter wird dies in den Figuren 3a, 3b, 3c und 4a, 4b, 4c dargestellt. Die ATL-Konsole 5 des Abgasturboladers ist einerseits Halterung des Abgasturboladers 9, andererseits führt die ATL-Konsole 5 das Abgas der Abgasleitungen 2, 3 hin zum Abgasturbolader 9.

Figur 2 stellt die Lösung mit Abgasrückführ (AGR)-Kühler 21 dar, der auf gleicher Höhe mit den schmalen Abgasleitungen zur integrierten Vorkühlung und Optimierung der AGR-Kühlerlänge verbaut ist. Die ATL-Konsole 5 ist mittels eines ATL-Flansches 6 mit dem Abgasturbolader 9 verbunden. Innerhalb der ATL-Konsole 5 werden die beiden Abgasstränge zusammengeführt, so dass der Abgasstrom ATL-Konsole 5 via ATL-Flansch 6 in Richtung Abgasturbolader 9 verlässt, um den Abgasturbolader 9 anzutreiben und diesen dann als Abgas zu verlassen.

In Figur 3a wird eine Vorkomplettierung der vorderen Teil-Abgasleitung 2 aus Figur 1 und in Figur 3b die Steckstückrohre 4, 8 der vorderen 2 bzw. hinteren Teil-Abgasleitung 3 aus Figur 1 gezeigt.

Figur 3c zeigt eine Vorkomplettierung der hinteren Teil-Abgasleitung 3 aus Figur 1 mit dem Steckstückrohr 4, das zwischen ATL-Konsole 5 und Teilabgasleitungsrohr 3 angeordnet ist und dem Steckstückrohr 8, das zwischen Teilabgasleitungsrohr 3 und AGR-Kühler 21 angeordnet ist.

Figuren 4a, 4b, 4c zeigen ein Steckstückrohr 4 zwischen ATL-Konsole 5 und Teilabgasleitungsrohr 2, 3. Das Steckstückrohr 4 bzw. 8 wird in die korrespondierende Aufnahmebohrung an der ATL-Konsole 5 oder dem AGR-Kühler 21 mit der Passung H7/h6 eingepresst. Die Aufnahmebohrung kann in einer alternativen Ausgestaltung eine Stahlbuchse 22 enthalten.

Der in Figur 4b dargestellte umlaufende Ringkontakt 20 dichtet gegen die Umgebung als umlaufende Verbindung ab. In Figur 4a und 4b erfolgt die Abdichtung mittels Flächenkontakt. Das Steckstückrohr 4 bzw. 8 besteht aus hochtemperaturbeständigem Stahl, um Temperaturdifferenzen von etwa 650 - 700°C auszugleichen. Der Wärmedehnungskoeffizient des Steckstückrohres 4 bzw. 8 ist so abgestimmt, dass die Passung in jedem Temperaturbereich abdichtet. Das in Figur 4b dargestellte Steckstückrohr 4 bzw. 8 ist außen beschichtet mit einem Korrosionsschutz, der Chromkarbid und MCrAIY-Partikel enthält. Die Abgasleitungen 2, 3 sind von der Konsole in Bezug auf Bauteildehnungen und Fertigungs- und Montagetoleranzen entkoppelt. Als Entkopplungssysteme können Lamellen-Ringe von "Fey", Steckstückverbindungen mit Drahtgestrickelementen oder auch ein Kupplungsstück wie bei der Verbindung des "Parker Airducts" vorgesehen werden. Der umlaufende Ringkontakt 20 dichtet als umlaufende Verbindung gegen die Umgebung ab und kann durch eine der drei Verbindungsmöglichkeiten (Fey, Drahtgestrick, Parker Airduct) dargestellt werden.

In Fig. 4a wird eine Variante mit Lamellen-Ringen dargestellt, die die Dichtung zwischen Steckstückrohr 4 und Stahlbuchse 22 sicherstellen.

In Fig. 4b wird eine Variante dargestellt mit einem als Kupplungsstück ausgebildeten Steckstückrohr 4 mit Ringkontakten 20, die zur Dichtung zwischen Steckstück und Stahlbuchse 22 beitragen.

In Fig. 4c wird eine Variante dargestellt, bei der die Abdichtung zwischen Stahlbuchse 22 und Steckstückrohr 4 mittels Drahtgestrick, Stahlringen und Wellfedern dargestellt werden.

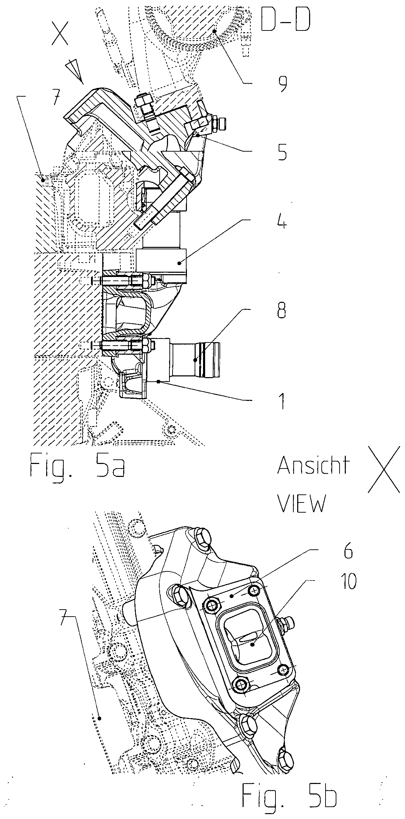

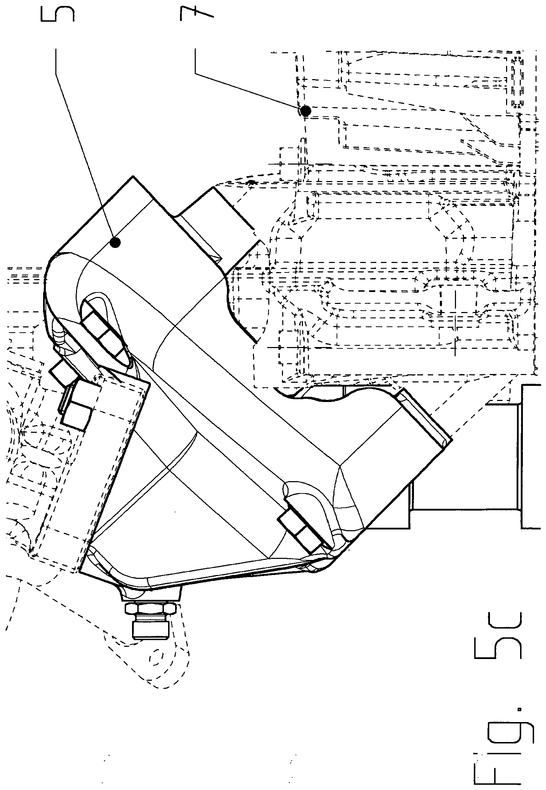

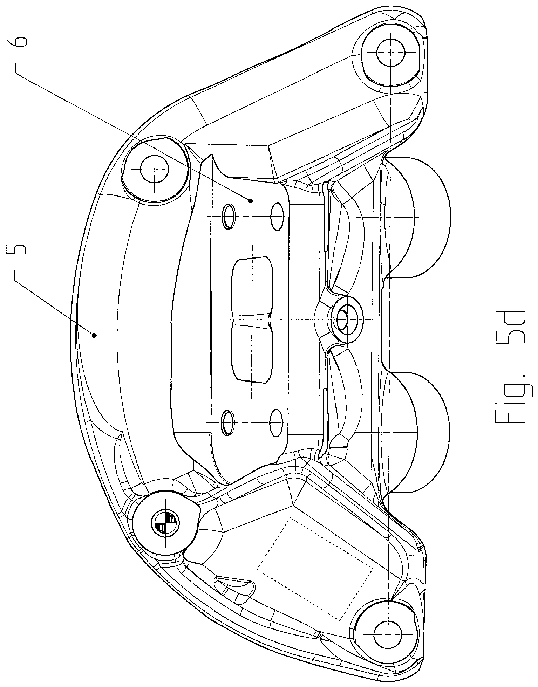

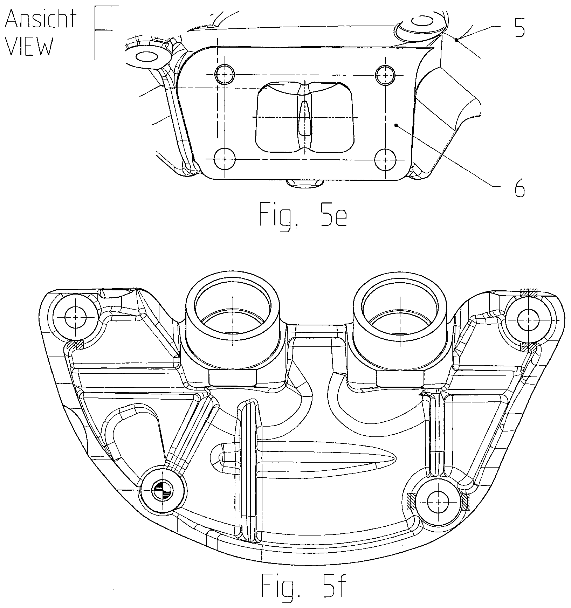

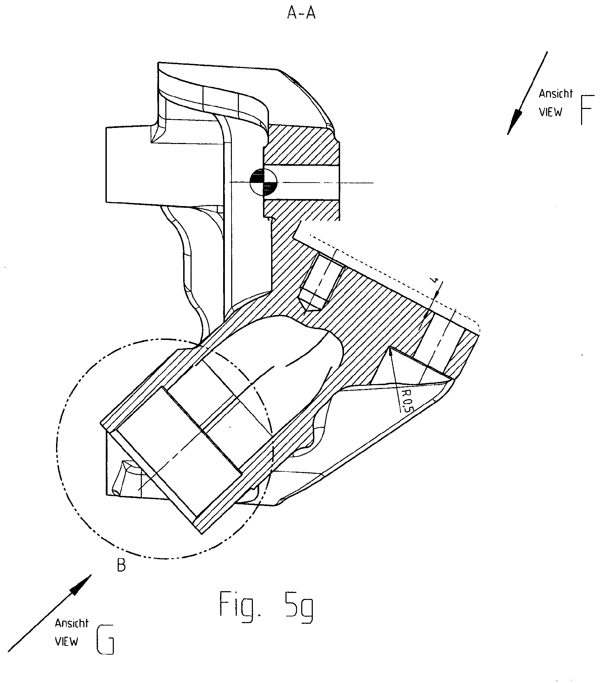

Die Figuren 5a, 5b, 5c, 5d, 5e, 5f und 5g zeigen verschieden Darstellungen der an der Brennkraftmaschine 7 angeordneten ATL-Konsole 5, wobei der Abgasturbolader 9 auf der der Brennkraftmaschine 7 gegenüberliegenden Seite (oberhalb) der ATL-Konsole 5 angeordnet ist.

Die ATL-Konsole 5 ist mittels des ATL-Flansches 6 mit dem lediglich in Figur 5a sichtbaren Abgasturbolader 9 verbunden. Die Brennkraftmaschine 7 ist in Figur 5b nur ansatzweise zu sehen, der Abgasturbolader gar nicht.

Die ATL-Konsole 5 weist einen Abgaskanal 10 in der Konsole auf, der vom ATL-Flansch 6 umrahmt wird, wie dies in Figur 5b zu sehen ist.

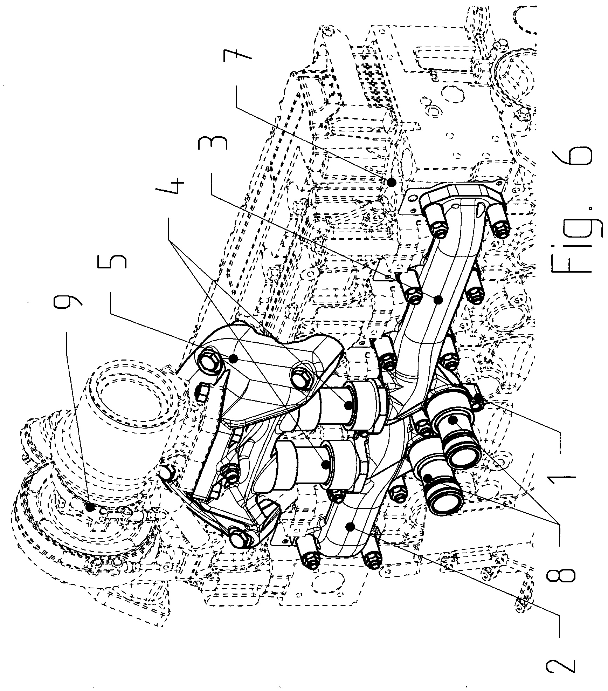

Figur 6 zeigt eine ATL-Konsole 5, die mittels eines Befestigungsflansches 26 an der Brennkraftmaschine 7 befestigt ist. Die ATL-Konsole 5 weist zwei Abgasrückführflansche 1 auf, die die Rückführung des Abgases zum Abgasturbolader 9 ermöglichen. In Figur 1 sind die Abgasrückführflansche 1 an den schmalen Abgasleitungen 2, 3 für den Betrieb mit AGR-Kühler 21 zu sehen. Der Abgasturbolader 9 ist mittels der ATL-Konsole 5 auf der Ladeluftleitung angeordnet. Die Abgasleitungen 2, 3 sind von der Konsole mittels Fey-Ringe insbesondere in Bezug auf Bauteildehnungen entkoppelt. Detaillierter wird dies in den Figuren 3a, 3b, 3c und 4a, 4b, 4c dargestellt. Die ATL-Konsole 5 des Abgasturboladers ist einerseits Halterung des Abgasturboladers 9, andererseits führt die ATL-Konsole 5 das Abgas der Abgasleitungen 2, 3 hin zum Abgasturbolader 9.

### Bezugszeichen

- 1: Abgasrückführflansch
- 2: Teil-Abgasleitung
- 3: Teil-Abgasleitung
- 4: Steckstückrohr zwischen Konsole und Teilabgasleitungsrohr
- 5: Abgasturbolader-Konsole
- 6: Abgasturbolader-Flansch
- 7: Brennkraftmaschine
- 8: Steckstückrohr zwischen Teilabgasleitungsrohr und AGR-Kühler
- 9: Abgasturbolader
- 10: Abgaskanal in der Konsole
- 20: Ringkontakt
- 21: AGR-Kühler
- 22: Stahlbuchse
- 26: Befestigungsflansch

## Patentansprüche

1. Brennkraftmaschine mit einem Kurbelgehäuse, in dem eine Kurbelwelle drehbar gelagert ist, an der zumindest ein einen Kolben tragendes Pleuel angelenkt ist, wobei der Kolben in einem von einem Zylinderkopf abgedeckten Zylinder bewegbar ist, wobei in den Zylinderkopf Gaswechselventile eingebaut sind, die über Gaswechselkanäle mit einer Abgasleitung und einer Ladeluftleitung verbunden sind und wobei ein Abgasturbolader (9) vorgesehen ist, der mittels einer Konsole (5) an der Brennkraftmaschine befestigt ist und mit der Abgasleitung und der Ladeluftleitung verbunden ist, **dadurch gekennzeichnet, dass** die Konsole (5) zwischen dem Abgasturbolader (9) und der Brennkraftmaschine angeordnet ist und dass die Konsole (5) das Abgas führt, wobei die Abgasleitung zweigeteilt ist und wobei die Konsole (5) zwei Abgasrückführflansche (1) aufweist.

2. Brennkraftmaschine nach Anspruch 1, **dadurch gekennzeichnet, dass** die Konsole (5) am Zylinderkopf befestigt ist.

3. Brennkraftmaschine nach einem oder mehreren der vorgenannten Ansprüche,
**dadurch gekennzeichnet, dass** die Verbindung zwischen Abgasleitung (2, 3) und Konsole (5) mittels wenigstens eines Steckstückrohrs (4) ausgeführt ist.

4. Brennkraftmaschine nach einem oder mehreren der vorgenannten Ansprüche,
**dadurch gekennzeichnet, dass** die Verbindung zwischen Abgasleitung (2, 3) und AGR mittels wenigstens eines Steckstückrohrs (8) ausgeführt ist.

5. Brennkraftmaschine nach einem oder mehreren der vorgenannten Ansprüche,
**dadurch gekennzeichnet, dass** sie einen Ladeluftkühler aufweist.

6. Brennkraftmaschine nach einem oder mehreren der vorgenannten Ansprüche,
**dadurch gekennzeichnet, dass** zur Abführung des Abgases im Abgastrakt wenigstens eine Leitung zur Abgasrückführung vorgesehen ist, die von der Abgasleitung abzweigt und einen AGR-Kühler (21) aufweist und in die Ansaugleitung des Ansaugtrakts mündet.

7. Brennkraftmaschine nach einem oder mehreren der vorgenannten Ansprüche,
**dadurch gekennzeichnet, dass** der wenigstens eine AGR-Kühler (21) im Wesentlichen an einer Brennkraftmaschinenlängsseite angeordnet ist.

8. Brennkraftmaschine nach einem oder mehreren der vorgenannten Ansprüche,
**dadurch gekennzeichnet, dass** zur Abführung des Abgases im Abgastrakt wenigstens eine Leitung zur Abgasrückführung vorgesehen ist, die von der Abgasleitung abzweigt und in die Ansaugleitung mündet, wobei in der Leitung zur Abgasrückführung wenigstens ein weiterer Verdichter zur Förderung der rückzuführenden Abgasmenge vorgesehen ist, wobei eine Bypassleitung unter Ausbildung einer Abzweigung stromaufwärts des Verdichters von der Rückführleitung abzweigt und unter Ausbildung einer Einmündung stromabwärts des Verdichters wieder in die Rückführleitung mündet.

9. Verfahren zum Betreiben einer Brennkraftmaschine,
**dadurch gekennzeichnet, dass** eine Brennkraftmaschine nach einem oder mehreren der vorgenannten Ansprüche zum Einsatz kommt.

## Claims

1. Internal combustion engine having a crankcase in which there is rotatably mounted a crankshaft on which there is articulated at least one connecting rod which bears a piston, wherein the piston is movable in a cylinder which is covered by a cylinder head, wherein gas exchange valves are installed in the cylinder head, which gas exchange valves are connected via gas exchange ducts to an exhaust line and to a charge-air line, and wherein an exhaust-gas turbocharger (9) is provided which is fastened by means of a bracket (5) to the internal combustion engine and which is connected to the exhaust line and to the charge-air line, **characterized in that** the bracket (5) is arranged between the exhaust-gas turbocharger (9) and the internal combustion engine, and **in that** the bracket (5) conducts the exhaust gas, wherein the exhaust line is in two parts, and wherein the bracket (5) has two exhaust-gas recirculation flanges (1).

2. Internal combustion engine according to Claim 1, **characterized in that** the bracket (5) is fastened to the cylinder head.

3. Internal combustion engine according to one or more of the preceding claims, **characterized in that** the connection between exhaust line (2, 3) and bracket (5) is realized by means of at least one plug-in pipe piece (4).

4. Internal combustion engine according to one or more of the preceding claims, **characterized in that** the connection between exhaust line (2, 3) and EGR is realized by means of at least one plug-in pipe piece (8).

5. Internal combustion engine according to one or more of the preceding claims, **characterized in that** said internal combustion engine has a charge-air cooler.

6. Internal combustion engine according to one or more of the preceding claims, **characterized in that**, for the discharge of the exhaust gas in the exhaust tract, at least one line for exhaust-gas recirculation is provided which branches off from the exhaust line and which has an EGR cooler (21) and which opens into the intake line of the intake tract.

7. Internal combustion engine according to one or more of the preceding claims, **characterized in that** the at least one EGR cooler (21) is arranged substantially at an internal combustion engine longitudinal side.

8. Internal combustion engine according to one or more of the preceding claims, **characterized in that**, for the discharge of the exhaust gas in the exhaust tract, at least one line for exhaust-gas recirculation is provided which branches off from the exhaust line and opens into the intake line, wherein, in the line for exhaust-gas recirculation, there is provided at least one further compressor for conveying the exhaust-gas quantity for recirculation, wherein a bypass line branches off from the recirculation line, such that a branching point is formed, upstream of the compressor, and opens into the recirculation line again, such that an opening-in point is formed, downstream of the compressor.

9. Method for operating an internal combustion engine, **characterized in that** an internal combustion engine according to one or more of the preceding claims is used.

## Revendications

1. Moteur à combustion interne avec un carter de vilebrequin, dans lequel un vilebrequin est monté de façon rotative, auquel est articulée au moins une bielle portant un piston, dans lequel le piston est déplaçable dans un cylindre recouvert par une culasse, dans lequel des soupapes d'échange de gaz sont intégrées dans la culasse, lesquelles sont raccordées par des canaux d'échange de gaz à une conduite de gaz d'échappement et à une conduite d'air de suralimentation, et dans lequel il est prévu un turbocompresseur à gaz d'échappement (9), qui est fixé sur le moteur à combustion interne au moyen d'une console (5) et qui est raccordé à la conduite de gaz d'échappement et à la conduite d'air de suralimentation, **caractérisé en ce que** la console (5) est disposée entre le turbocompresseur à gaz d'échappement (9) et le moteur à combustion interne et **en ce que** la console (5) conduit le gaz d'échappement, dans lequel la conduite de gaz d'échappement est divisée en deux et dans lequel la console (5) présente deux brides de retour de gaz d'échappement (1).

2. Moteur à combustion interne selon la revendication 1, **caractérisé en ce que** la console (5) est fixée à la culasse.

3. Moteur à combustion interne selon une ou plusieurs des revendications précédentes, **caractérisé en ce que** le raccordement entre la conduite de gaz d'échappement (2, 3) et la console (5) est réalisé au moyen d'au moins un raccord tubulaire à emboîter (4).

4. Moteur à combustion interne selon une ou plusieurs des revendications précédentes, **caractérisé en ce que** le raccordement entre la conduite de gaz d'échappement (2, 3) et l'AGR est réalisé au moyen d'au moins un raccord tubulaire à emboîter (8).

5. Moteur à combustion interne selon une ou plusieurs des revendications précédentes, **caractérisé en ce qu'**il présente un refroidisseur d'air de suralimentation.

6. Moteur à combustion interne selon une ou plusieurs des revendications précédentes, **caractérisé en ce qu'**il est prévu pour l'évacuation du gaz d'échappement dans la ligne de gaz d'échappement au moins une conduite pour le recyclage de gaz d'échappement, qui part de la conduite de gaz d'échappement et présente un refroidisseur AGR (21) et débouche dans la conduite d'aspiration de la ligne d'aspiration.

7. Moteur à combustion interne selon une ou plusieurs des revendications précédentes, **caractérisé en ce que** ledit au moins un refroidisseur AGR (21) est disposé essentiellement sur un côté longitudinal du moteur à combustion interne.

8. Moteur à combustion interne selon une ou plusieurs des revendications précédentes, **caractérisé en ce qu'**il est prévu pour l'évacuation du gaz d'échappement dans la ligne de gaz d'échappement au moins une conduite pour le recyclage de gaz d'échappement, qui part de la conduite de gaz d'échappement et débouche dans la conduite d'aspiration, dans lequel il est prévu dans la conduite pour le recyclage de gaz d'échappement au moins un autre compresseur pour le transport de la quantité de gaz d'échappement à recycler, dans lequel une conduite de dérivation part de la conduite de recyclage en amont du compresseur en formant une ramification et débouche de nouveau dans la conduite de recyclage en aval du compresseur en formant une embouchure.

9. Procédé pour faire fonctionner un moteur à combustion interne, **caractérisé en ce que** l'on utilise un moteur à combustion interne selon une ou plusieurs des revendications précédentes.
